(19) Europäisches Patentamt
European Patent Office
Office européen des brevets

(11) **EP 2 116 293 B1**

(12) **EUROPÄISCHE PATENTSCHRIFT**

(45) Veröffentlichungstag und Bekanntmachung des Hinweises auf die Patenterteilung:
**17.03.2010 Patentblatt 2010/11**

(51) Int Cl.:
**B01D 53/94** (2006.01)     **B01J 29/072** (2006.01)
**B01J 35/00** (2006.01)     **F01N 3/20** (2006.01)

(21) Anmeldenummer: **08007163.2**

(22) Anmeldetag: **11.04.2008**

(54) **Abgasreinigungssystem zur Behandlung von Motorenabgasen mittels SCR-Katalysator**

Exhaust gas cleaning system for treating motor exhaust gases with an SCR catalytic converter

Système de nettoyage de gaz d'échappement destiné au traitement de gaz d'échappement de moteur à l'aide d'un catalyseur SCR

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(43) Veröffentlichungstag der Anmeldung:
**11.11.2009 Patentblatt 2009/46**

(73) Patentinhaber: **Umicore AG & Co. KG**
**63457 Hanau-Wolfgang (DE)**

(72) Erfinder:
• **Adelmann, Katja**
**64297 Darmstadt (DE)**
• **Soeger, Nicola**
**60385 Frankfurt am Main (DE)**
• **Pfeiffer, Marcus**
**42719 Solingen (DE)**
• **Schneider, Wolfgang**
**63517 Rodenbach (DE)**
• **Jeske, Gerald**
**63545 Neuberg (DE)**
• **Kreuzer, Thomas**
**61184 Karben (DE)**

(56) Entgegenhaltungen:
EP-A- 1 795 724     WO-A-2008/006427
WO-A-2008/049491    DE-B3-102006 031 724
US-A1- 2006 039 843

**Beschreibung**

Die Erfindung betrifft ein Abgasreinigungssystem (Verfahren und Vorrichtung) zur Behandlung der Abgase von Verbrennungsmotoren unter Verwendung von SCR-Katalysatoren und von in den Abgasstrang eindosiertem Ammoniak oder einer zu Ammoniak zersetzlichen Verbindung als Reduktionsmittel.

Das Abgas von Dieselmotoren und mit magerem Luft/Kraftstoff-Gemisch betriebenen Benzinmotoren enthält neben den üblichen Schadgasen Kohlenmonoxid CO, Kohlenwasserstoffe HC und Stickoxide $NO_x$ einen relativ hohen Sauerstoffgehalt von bis zu 15 Vol.-%. Kohlenmonoxid und Kohlenwasserstoffe können durch Oxidation leicht unschädlich gemacht werden. Die Reduktion der Stickoxide zu Stickstoff ist wegen des hohen Sauerstoffgehaltes wesentlich schwieriger.

Ein bekanntes Verfahren zur Entfernung von Stickoxiden aus Abgasen in Gegenwart von Sauerstoff ist das Verfahren der selektiven katalytischen Reduktion (SCR-Verfahren; Selective Catalytic Reduction) mittels Ammoniak, das auch aus einer Vorläuferverbindung wie zum Beispiel Harnstoff in situ erzeugt werden kann. In diesem Verfahren erfolgt die Komproportionierung der Stickoxide mit Ammoniak unter Bildung von Stickstoff an einem geeigneten Katalysator, kurz als SCR-Katalysator bezeichnet.

EP-B 0 385 164 beschreibt sogenannte Vollkatalysatoren zur selektiven Reduktion von Stickoxiden mit Ammoniak, die neben Titanoxid und mindestens einem Oxid von Wolfram, Silicium, Bor, Aluminium, Phosphor, Zirkonium, Barium, Yttrium, Lanthan und Cer eine zusätzliche Komponente enthalten, ausgewählt aus der Gruppe der Oxide von Vanadium, Niob, Molybdän, Eisen und Kupfer.

US 4,961,917 beansprucht Katalysatorformulierungen zur Reduktion von Stickoxiden mit Ammoniak, die neben Zeolithen mit einem Silica:Alumina-Verhältnis von mindestens 10 und einer Porenstruktur, die in allen Raumrichtungen durch Poren mit einem durchschnittlichen kinetischen Porendurchmesser von mindestens 7 Ångström verknüpft ist, Eisen und/oder Kupfer als Promotoren enthalten. EP-A 1 495 804 und US 6,914,026 zeigen Methoden zur Verbesserung der Stabilität solcher Zeolith-basierter Systeme unter hydrothermalen Alterungsbedingungen auf.

Die in den genannten Schriften beschriebenen SCR-Katalysatorformulierungen, die den gegenwärtigen Stand der Technik repräsentieren, haben gemeinsam, daß sie nur in einem bestimmten Temperaturbereich - häufig erst oberhalb von 350°C - gute Stickoxid-Konversionsraten aufweisen. Die Umsetzung läuft in der Regel nur in einem relativ schmalen Temperaturbereich optimal ab. Dieses Umsatzoptimum ist für SCR-Katalysatoren typisch und liegt in der Arbeitsweise der Katalysatoren begründet.

Beim Einsatz in Kraftfahrzeugen ist der SCR-Katalysator infolge der transienten Betriebsweise des Verbrennungsmotors stark schwankenden Betriebsbedingungen ausgesetzt. Zur Einhaltung der gesetzlich vorgegebenen Emissionsgrenzwerte müssen jedoch auch in Betriebspunkten, die außerhalb des Umsatzoptimums des SCR-Katalysators liegen, möglichst hohe Stickoxidumsätze bei guter Selektivität gewährleistet werden. Eine vollständige und selektive Stickoxid-Konvertierung bei niedrigen Temperaturen muß ebenso sichergestellt sein, wie der selektive und vollständige Umsatz hoher Stickoxidmengen in sehr heißem Abgas, die beispielsweise bei Vollastfahrten auftreten.

Daher werden SCR-Katalysatoren wie die in der EP-B 0 385 164 oder der US 4,961,917 genannten Formulierungen gelegentlich in Kombination mit einem weiteren Stickoxid-Reduktionskatalysator mit einem anderen Arbeitsbereich eingesetzt, um die Entfernung der Stickoxide bei allen im Fahrbetrieb auftretenden Arbeitstemperaturen, die zwischen 200°C und 600°C liegen, sicherstellen zu können.

So beschreibt US 2006/0039843 A1 ein Abgasreinigungssystem enthaltend eine Dosiereinrichtung für Ammoniak oder eine Ammoniak-Vorläuferverbindung und ein erstes Katalysatorsubstrat, auf dem anströmseitig eine SCR-katalytisch aktive Beschichtung und abströmseitig eine Ammoniak-Sperrkatalysatorbeschichtung angeordnet sind. Zwischen der Dosiereinrichtung für Ammoniak oder einer Ammoniak-Vorläuferverbindung und dem ersten Katalysatorsubstrat wird in einer bevorzugten Ausführungsform ein zweiter SCR-Katalysator angeordnet. Als SCR-Katalysatoren werden in dieser Anordnung bevorzugt Vanadium-haltige SCR-Katalysatoren und/oder Zeolith-basierte SCR-Katalysatoren eingesetzt, um hinreichend gute Umsätze zu erzielen.

Auch EP-A 1 795 724 beschreibt ein Abgasreinigungssystem enthaltend eine Dosiereinrichtung für Harnstofflösung als zu Ammoniak zersetzlicher Verbindung und zwei hintereinander geschaltete SCR-Katalysatoren. Der anströmseitig angeordnete Katalysator ist hochtemperaturaktiv und enthält bevorzugt Vanadiumoxid, der abströmseitig angeordnete Katalysator ist tieftemperaturaktiv und enthält bevorzugt Cu-, Fe-, Co- oder Ag-Zeolith oder Cu-, Fe-, Co- oder Ag-Alumina.

Der Einsatz Vanadium-haltiger Katalysatoren ist infolge der hohen Flüchtigkeit von Vanadiumverbindungen in Sauerstoff-haltiger, feuchter Atmosphäre bei erhöhten Temperaturen toxikologisch bedenklich.

EP-A 0 393 905 bzw. US 5,516,497 offenbaren Verfahren zur Umsetzung von Stickoxiden mit Ammoniak in einem Gasstrom umfassend (i) das Durchleiten des $NO_x$ und Ammoniak enthaltenden Gasstroms durch eine erste Katalysatorzone enthaltend einen Eisen- und/oder Kupfer-promotierten ersten Zeolithen und (ii) das Durchleiten des resultierenden Stickoxid-verminderten Gasstroms; der nicht umgesetztes Ammoniak enthält, durch eine zweite Katalysatorzone, die ebenfalls einen Eisen- und/oder Kupfer-promotierten, zweiten Zeolithen enthält. Die beiden Katalysatorzonen unterscheiden sich im Gehalt der Promotoren und, den Angaben in dieser Schrift zufolge, dadurch bedingt in ihren Funktionen: Die erste Zone, die bis zu 1 Gew.-% Eisen und/oder Kupfer enthält, katalysiert wirksam die Reduktion von Stickoxiden mit Ammoniak, während die zweite Zone, die mehr als 1 Gew.-% Eisen und/oder Kupfer enthält, in der Oxidation von Ammoniak zu Stickstoff wirksam ist.

Der Einsatz ausschließlich Zeolith-basierter SCR-Katalysatorsysteme ist aufgrund der hohen Rohstoffpreise für Zeolithe sehr teuer.

WO 2008/006427 offenbart einen SCR-Katalysator, der aus zwei auf einem Tragkörper nacheinander angeordneten Materialzonen aufgebaut ist. Die Materialzonen zeichnen sich durch unterschiedliche Umsatzprofile in der SCR-Reaktion aus, wobei das Umsatzprofil der vom zu reinigenden Abgas zuerst kontaktierten Materialzone bei höheren Temperaturen liegt als das Umsatzprofil der vom zu reinigenden Abgas nachgeordnet kontaktierten Materialzone. Der Katalysator ist dadurch gekennzeichnet, daß die vom Abgas zuerst kontaktierte Zone Eisen-ausgetauschte Zeolithe enthält und die vom zu reinigenden Abgas nachgeordnet kontaktierte Materialzone einen Übergangsmetall-ausgetauschten Zeolithen oder ein Übergangsmetalloxid ausgewählt aus der Gruppe bestehend aus Vanadiumpentoxid, Wolframtrioxid und Titandioxid oder Kombinationen davon oder einen Übergangsmetall-ausgetauschten Zeolithen und ein Übergangsmetalloxid ausgewählt aus der Gruppe bestehend aus Vanadiumpentoxid, Wolframtrioxid und Titandioxid oder Kombinationen davon enthält.

Katalysatoren dieser Art zeigen ein schlechtes Anspringverhalten, insbesondere bei Abgastemperaturen unterhalb von 300°C. Darüber hinaus verschlechtert sich der $NO_x$-Umsatz über SCR-Katalysatoren, die überwiegend aus Zeolithverbindungen aufgebaut sind, wenn das zu reinigende Abgas Reste von unverbrannten Kohlenwasserstoffen enthält.

Es ist Aufgabe der vorliegenden Erfindung, ein auf der SCR-Technologie beruhendes Abgasreinigungssystem (Verfahren und Vorrichtung) zur Verminderung von Stickoxiden in Dieselmotorenabgasen, die noch unverbrannte Kohlenwasserstoffe enthalten, zur Verfügung zu stellen, das sich durch ein gutes Anspringverhalten bei tiefen Temperaturen und gleichzeitig hoher Konversionsleistung über einen möglichst breiten Temperaturbereich auszeichnet. Das Abgasreinigungssystem soll frei sein von toxikologisch bedenklichen Komponenten wie Vanadium und zudem eine kostengünstige Lösung darstellen.

Diese Aufgabe wird gelöst durch ein Verfahren zur Behandlung von Stickoxide und Kohlenwasserstoffe enthaltenden Dieselmotorenabgasen umfassend (a) die Zugabe von Ammoniak oder einer zu Ammoniak zersetzlichen Verbindung aus einer nicht zum Abgasstrang gehörenden Quelle in den Stickoxide und Kohlenwasserstoffe enthaltenden Abgasstrom; (b) das Überleiten des Stickoxide, Kohlenwasserstoffe und Ammoniak oder eine zu Ammoniak zersetzliche Verbindung enthaltenden Abgasstroms über einen ersten, anströmseitig angeordneten SCR-Katalysator, der die Komproportionierung der Stickoxide mit Ammoniak in einem Temperaturbereich zwischen 300°C und 500°C wirksam katalysiert, und dabei die im Abgas enthaltenen Kohlenwasserstoffe mindestens teilweise oxidiert; und (c) das Überleiten des aus (b) resultierenden Abgases über einen zweiten, abströmseitig angeordneten SCR-Katalysator, der die Komproportionierung der Stickoxide mit Ammoniak in einem Temperaturbereich zwischen 150°C und 400°C wirksam katalysiert und zugleich überschüssiges Ammoniak speichert. Für die Durchführung des erfindungsgemäßen Verfahrens wird eine Abgasreinigungsvorrichtung zur Verminderung von Stickoxiden im mageren Abgas von Verbrennungsmotoren vorgestellt, enthaltend in Kombination und in dieser Reihenfolge (1) eine Vorrichtung zur Zugabe von Ammoniak oder einer zu Ammoniak zersetzlichen Verbindung in den Stickoxide enthaltenden Abgasstrom aus einer nicht zum Abgasstrang gehörenden Quelle, sowie die Quelle für Ammoniak oder eine zu Ammoniak zersetzliche Verbindung; (2) einen ersten SCR-Katalysator, der die Komproportionierung der Stickoxide mit Ammoniak in einem Temperaturbereich zwischen 300°C und 500°C wirksam katalysiert und weder Vanadium- noch Zeolithverbindungen enthält; und (3) einen zweiten, Vanadium-freien SCR-Katalysator, der die Komproportionierung der Stickoxide mit Ammoniak in einem Temperaturbereich zwischen 150°C und 400°C wirksam katalysiert und eine Kupfer- (Cu-) ausgetauschte Zeolithverbindung enthält.

Das erfindungsgemäße Abgasreinigungssystem (Verfahren und Vorrichtung) ermöglicht die effektive Verminderung von Stickoxiden auch in Kohlenwasserstoff-haltigen Abgasen über einen breiten Temperaturbereich von 150 bis 500°C (sog. "Arbeitsfenster"). Es zeichnet sich im Vergleich zu vollständig Zeolith-basierten SCR-Systemen, wie sie beispielsweise in WO 2008/006427 oder EP 0 393 905 beschrieben sind, einerseits durch einen erheblichen Kostenvorteil, andererseits durch ein verbessertes Anspringverhalten im Tieftemperaturbereich unterhalb von 300°C aus. Dabei kommt das System ohne Vanadiumverbindungen aus, deren Einsatz toxikologisch bedenklich ist.

Die Verbesserung des Anspringverhaltens beruht nach Erkenntnissen der Erfinder darauf, daß als erster SCR-Katalysator eine Zusammensetzung ausgewählt wird, die in der Lage ist, die im Abgas enthaltenden Kohlenwasserstoffe mindestens teilweise zu oxidieren, ohne signifikante Mengen davon einzuspeichern. Es wurde beobachtet, daß eine effektive Komproportionierung von Stickoxiden mit Ammoniak an Vanadium-freien Katalysatoren nach dem Stand der Technik nicht erfolgt, solange das Abgas Kohlenwasserstoffe enthält. Besonders ausgeprägt ist diese Hemmung des Anspringverhaltens in Kohlenwasserstoff haltigen Abgasen bei den Zeolith-haltigen SCR-Katalysatoren. Diese speichern Kohlenwasserstoffe im Porengerüst der Zeolithverbindungen ein. Wir glauben, daß diese eingespeicherten Kohlenwasserstoffe die in der Ammoniak-SCR-Reaktion aktiven Reaktionszentren im Katalysator mindestens teilweise blockieren, so daß die Komproportionierung der Stickoxide mit Ammoniak gestört ist.

Weiterhin wird völlig überraschend festgestellt, daß es die erfindungsgemäße Vorrichtung ermöglicht, eine Anpassung der Dosierstrategie für Ammoniak bzw. für eine zu Ammoniak zersetzliche Verbindung an die dynamischen Wechsel der Betriebspunkte im Kraftfahrzeug vorzunehmen. Wir glauben, daß erst durch die erfindungsgemäße Kombination eines anströmseitig angeordneten, ersten Zeolith- und Vanadium-freien, im Temperaturbereich zwischen 300°C und 500°C aktiven SCR-Katalysators mit einem nachgeschalteten zweiten SCR-Katalysator, der sein Aktivitätsmaximum im Tieftemperaturbereich zwischen 150°C und 400°C zeigt und darüber hinaus in der Lage ist, überschüssiges Ammoniak einzuspeichern, die bedarfsgerechtere Dosierung des Reduktionsmittels gelingt: Durch das verbesserte Anspringverhalten reagiert der erste, vorgeschaltete SCR-Katalysator äußerst flexibel auf ein variierendes Angebot an Stickoxiden und Reduktionsmittel und setzt die ankommenden Stickoxide ohne Verzögerungen mit dem verfügbaren Ammoniak um. Der nachgeschaltete Tieftemperaturkatalysator, der in der Lage ist, gewisse Mengen Ammoniak einzuspeichern, puffert kurzzeitige Über- und Unterdosierungen von Ammoniak ab, die bei der Anpassung der dosierten Reduktionsmittelmenge auf Betriebspunktänderungen auftreten können. Dies geschieht einerseits durch Einlagerung von zuviel dosiertem Ammoniak im Zeolithen, andererseits durch Bereitstellung von eventuell fehlendem Ammoniak aus dem zeolithischen Speicher. Da der vorgeschaltete SCR-Katalysator erfindungsgemäß die im Abgas vorhandenen Kohlenwasserstoffe oxidiert, wird eine zeitweise Blockade oder ein verzögertes Anspringen des nachgeschalteten Zeolith-haltigen SCR-Katalysators in der Ammoniak-SCR-Reaktion infolge von Kohlenwasserstoff-Einlagerungen verhindert.

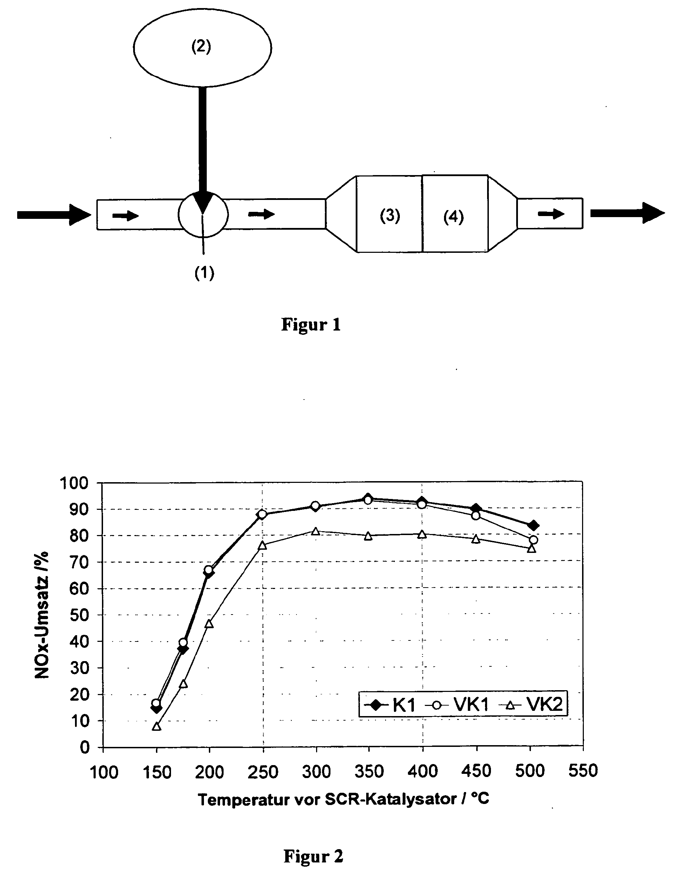

Dieser überraschende Effekt wird durch die Hintereinanderschaltung zweier SCR-Katalysatoren in der Abgasreinigungsvorrichtung gemäß Anspruch 7 erzielt. Dabei kann jeder der beiden SCR-Katalysatoren als Beschichtung auf einem inerten Tragkörper vorliegen. Eine im Hinblick auf die Beschränkungen des im Kraftfahrzeug verfügbaren Bauraums vorteilhafte Ausführungsform erhält man, wenn der erste und der zweite SCR-Katalysator als Beschichtung auf demselben Tragkörper angeordnet sind. Dabei liegt bevorzugt der erste SCR-Katalysator als eine anströmseitig angeordnete Beschichtungszone auf dem Tragkörper vor, während der zweite SCR-Katalysator eine abströmseitige Beschichtungszone auf dem Tragkörper bildet. Eine solche bevorzugte Ausführungsform der erfindungsgemäßen Abgasreinigungsanlage ist schematisch in Figur 1 dargestellt.

Das Verhältnis der Längen der beiden Beschichtungszonen zueinander wird dabei von der Entfernung des resultierenden Zonenkatalysators vom Motor und somit von der im Regelbetrieb durchschnittlich vorliegenden Abgastemperatur im Bauteil mitbestimmt. Dabei sollte eine kritische Länge der abströmseitigen, zeolith-haltigen Beschichtungszone nicht unterschritten werden, um die oben beschriebene Pufferwirkung gegenüber Ammoniakdurchbrüchen einerseits und Stickoxiddurchbrüchen andererseits nicht zu sehr einzuschränken. Bei der Dimensionierung der Länge der vorderen Zone spielt der Kohlenwasserstoffgehalt im Abgas vor dem erfindungsgemäßen Bauteil eine bedeutende Rolle. Bevorzugt liegt das Verhältnis der Längen von anströmseitig angeordneter Beschichtungszone zu abströmseitiger Beschichtungszone zwischen 0,1 und 3, besonders bevorzugt zwischen 0,5 und 2. Betragen die durchschnittlich vorliegenden Abgastemperaturen um die 300°C und enthält das Abgas keine außerordentlich hohen Mengen an Kohlenwasserstoffen, so liegt das ganz besonders bevorzugte Verhältnis der Längen von anströmseitig angeordneter Beschichtungszone zu abströmseitiger Beschichtungszone zwischen 0,8 und 1,5.

Als erster, anströmseitiger SCR-Katalysator muß eine Zusammensetzung gewählt werden, die die Komproportionierung der Stickoxide mit Ammoniak in einem Temperaturbereich zwischen 300°C und 500°C wirksam katalysiert, die die Eigenschaft hat, Kohlenwasserstoffe wenigstens teilweise zu oxidieren und die dabei weder Vanadiumnoch Zeolithverbindungen enthält. Bevorzugte Ausführungsformen dieses ersten SCR-Katalysators enthalten Wolframoxid $WO_3$ und ein homogenes Cer-Zirkon-Mischoxid $(Ce, Zr)O_2$ wobei der Gehalt von Wolframoxid $WO_3$ zwischen 5 und 25 Gew.-%, der Gehalt des homogenen Cer-Zirkon-Mischoxids zwischen 50 und 95 Gew.-% liegen kann, jeweils bezogen auf die Gesamtmenge des ersten SCR-Katalysators ohne Berücksichtigung der Masse des inerten Tragkörpers. Bevorzugt liegt der Gehalt des Wolframoxid $WO_3$ im ersten SCR-Katalysator zwischen 7 und 17 Gew.-%, besonders bevorzugt zwischen 10 und 15 Gew.-%, bezogen auf die Gesamtmenge des ersten SCR-Katalysators ohne Berücksichtigung der Masse des inerten Tragkörpers. Der Gehalt von homogenem Cer-Zirkon-Mischoxid $(Ce, Zr)O_2$ im ersten SCR-Katalysator liegt bevorzugt zwischen 60 und 90 Gew.-%, besonders bevorzugt zwischen 70 und 90 Gew.-%, bezogen auf die Gesamtmenge des ersten SCR-Katalysators ohne Berücksichigung der Masse des inerten Tragkörpers. Geeignet sind homogene Cer-Zirkon-Mischoxide $(Ce, Zr)O_2$, in denen das Gewichtsverhältnis von Ceroxid $CeO_2$ zu Zirkonoxid $ZrO_2$ zwischen 0,43 und 2,33 liegt. Bevorzugt werden solche eingesetzt, die ein Verhältnis von $CeO_2$ zu $ZrO_2$ zwischen 0,67 und 1,5 aufweisen. Besonders bevorzugt sind feste Lösungen aus Ceroxid und Zirkonoxid mit einem $CeO_2$ zu $ZrO_2$-Verhältnis von 0,8 bis 1,2.

Als zweiter, abströmseitig angeordneter SCR-Katalysator wird eine Zusammensetzung gewählt, die die Komproportionierung der Stickoxide mit Ammoniak in einem Temperaturbereich zwischen 150°C und 400°C wirksam katalysiert und eine Kupfer- (Cu-) ausgetauschte Zeolithverbindung enthält. Neben Kupfer kommen auch Silber (Ag), Gold (Au) oder Platin (Pt) als Austauschmetall in Frage, bevorzugt ist jedoch Kupfer. Der Gehalt des Austauschmetalls kann bei 2 bis 10 Gew.-% bezogen auf das Gesamtgewicht der eingesetzten Zeolithverbindung liegen. Bevorzugt enthält die eingesetzte Zeolithverbindung 3 bis 8 Gew.-% Cu, besonders bevorzugt 4 bis 6 Gew.-% Cu, wobei eine geeignete Zeolithverbindung vorteilhafterweise ausgewählt wird aus der Gruppe bestehend aus beta- (β-) Zeolith, Y-Zeolilth, ZSM-5, ZSM-20, Ferrierit und Mordenit.

Die beschriebene Abgasreinigungsvorrichtung eignet sich zur Durchführung des Verfahrens zur Behandlung von Stickoxide und Kohlenwasserstoffe enthaltenden Dieselmotorenabgasen nach Anspruch 1. Das erfindungsgemäße Verfahren umfaßt drei wesentliche Schritte, nämlich

(a) die Zugabe von Ammoniak oder einer zu Ammoniak zersetzlichen Verbindung aus einer nicht zum Abgasstrang gehörenden Quelle in den Stickoxide und Kohlenwasserstoffe enthaltenden Abgasstrom;

(b) das Überleiten des Stickoxide, Kohlenwasserstoffe und Ammoniak oder eine zu Ammoniak zersetzliche Verbindung enthaltenden Abgasstroms über einen ersten anströmseitig angeordneten SCR-Katalysator, der die Komproportionierung der Stickoxide mit Ammoniak in einem Temperaturbereich zwischen 300°C und 500°C wirksam katalysiert und dabei die im Abgas enthaltenen Kohlenwasserstoffe mindestens teilweise oxidiert; und

(c) das Überleiten des aus (b) resultierenden Abgases über einen zweiten, abströmseitig angeordneten SCR-Katalysator, der die Komproportionierung der Stickoxide mit Ammoniak in einem Temperaturbereich zwischen 150°C und 400°C wirksam katalysiert und zugleich überschüssiges Ammoniak speichert.

Die nicht zum Abgasstrang gehörende Quelle für Ammoniak oder eine zu Ammoniak zersetzliche Verbindung kann beispielsweise ein im Fahrzeug untergebrachter, mit Ammoniak befüllter Druckbehälter sein. Ebensogut kann es sich um einen Tank für wässrige Harnstofflösung oder Ammoniumcarbamatlösung oder andere, im Stand der Technik bekannte, vergleichbare Einrichtungen handeln.

Bei der Durchführung des erfindungsgemäßen Verfahrens werden gute Stickoxidumsätze insbesondere in kälteren Betriebspunkten erzielt, wenn der Stickoxide und Kohlenwasserstoffe enthaltende Abgasstrom vor der Zugabe von Ammoniak oder einer zu Ammoniak zersetzlichen Verbindung in (a) über einen Oxidationskatalysator geleitet wird, der mindestens einen Teil des in den Stickoxiden enthaltenden NO zu $NO_2$ oxidiert. Wird dabei das $NO_2/NO_x$-Verhältnis im Abgas so verändert, daß der Abgasstrom vor dem Überleiten über den ersten, anströmseitig angeordneten SCR-Katalysator in (b) ein $NO_2/NO_x$-Verhältnis von 0,3 bis 0,7 aufweist, so sind die Stickoxidumsätze besonders hoch. Ganz besonders hohe Stickoxidumsätze ergeben sich, wenn das $NO_2/NO_x$-Verhältnis vor dem Überleiten über den ersten, anströmseitig angeordneten SCR-Katalysator in (b) auf 0,4 bis 0,6 bzw. 0,5 eingestellt wird.

Auch bei Vorschaltung eines Oxidationskatalysators entfaltet das erfindungsgemäße Abgasreinigungssystem die überraschenden Vorteile, die bereits beschrieben wurden und die in der spezifischen Kombination der Verfahrens- bzw. Vorrichtungsmerkmale begründet liegen. Dies gilt insbesondere in Kaltstartbetriebspunkten, in Leerlauf- und in Schubphasen eines Dieselfahrzeugs, wenn die Menge der aus dem Motor in die Abgasanlage gelangenden unverbrannten Kohlenwasserstoffe so hoch ist, daß sie über dem vorgeschalteten Oxidationskatalysator nicht vollständig umgesetzt werden kann.

Desweiteren ist es vorteilhaft, wenn die in Verfahrensschritt (a) zum Abgasstrom hinzuzufügende Menge Ammoniak oder einer zu Ammoniak zersetzlichen Verbindung so gewählt wird, daß der Abgasstrom vor dem Überleiten über den ersten anströmseitig angeordneten SCR-Katalysator in (b) ein $NH_3/NO_x$-Verhältnis von 0,8 bis 1,2 aufweist.

Gegebenenfalls kann der Abgasstrom nach dem Überleiten durch den zweiten, abströmseitig angeordneten SCR-Katalysator in Verfahrensschritt (c) über einen Oxidationskatalysator geleitet werden, der selektiv die Oxidation von Ammoniak zu Stickstoff katalysiert. Ein solcher Oxidationskatalysator, gelegentlich auch als Ammoniak-Sperrkatalysator bezeichnet, ist in bevorzugten Ausführungsformen auf einem Rußpartikel filternden Tragkörper angeordnet.

Die Erfindung wird im folgenden anhand einiger Beispiele, Vergleichsbeispiele und Figuren weiter erläutert. Dabei zeigt:

Figur 1:    die schematische Darstellung einer bevorzugten Ausführungsform der erfindungsgemäßen Abgasreinigungsvorrichtung mit (1) der Vorrichtung zur Zugabe von Ammoniak oder einer zu Ammoniak zersetzlichen Verbindung in den Abgasstrom (Strömungsrichtung mit "→" gekenn- zeichnet) aus einer nicht zum Abgasstrang gehörenden Quelle (2), einem ersten SCR-Katalysator (3), der die Komproportionierung der Stickoxide mit Ammoniak in einem Temperaturbereich zwischen 300°C und 500°C wirksam katalysiert und einem zweiten SCR-Katalysator (4), der die Komproportionierung der Stickoxide mit Ammoniak in einem Temperaturbereich zwischen 150°C und 400°C wirksam katalysiert.

Figur 2:    den Stickoxid-Umsatz in Kohlenwasserstoff-haltigem Abgas an frisch hergestellten katalytisch aktiven Bauteilen enthaltend eine anströmseitige Katalysatorzone mit einen ersten SCR-Katalysator und eine abströmseitige Katalysatorzone mit einem zweiten SCR-Katalysator; Verhältnis der Zonenlängen = 1; VK 1 =

$V_2O_2/TiO_2/WO_3$ vor Cu-Zeolith; VK2 = Fe-Zeolith vor Cu-Zeolith; K1 = erfindungsgemäßes katalytisch aktives Bauteil: $WO_3(Ce,Zr)O_2$ vor Cu-Zeolith

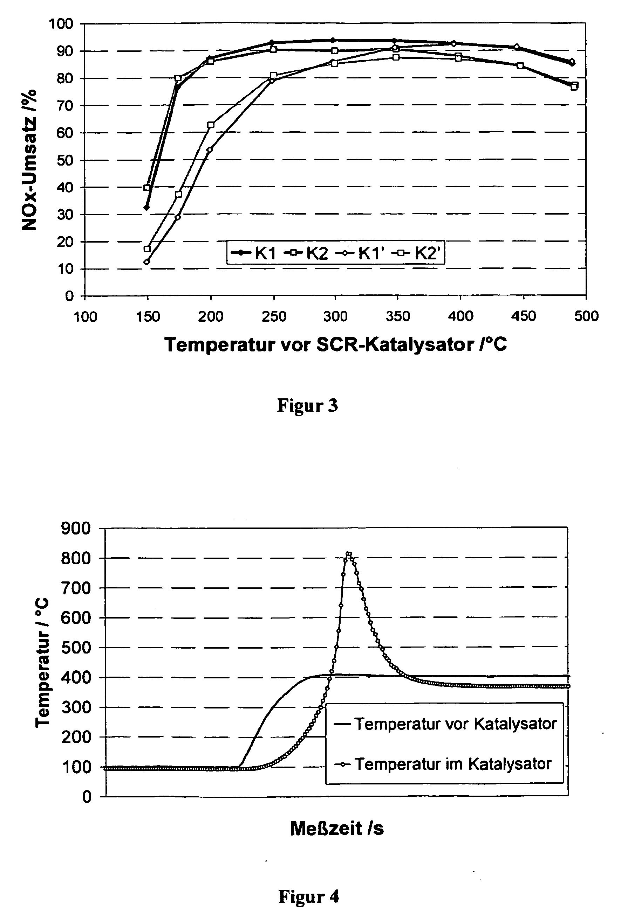

**Figur 3:** den Einfluß des Längenverhältnisses der Katalysatorzonen auf den Stickoxid-Umsatz der erfindungsgemäßen katalytisch aktiven Bauteile enthaltend eine anströmseitige Katalysatorzone 1 mit einen ersten SCR-Katalysator und eine abströmseitige Katalysatorzone 2 mit einem zweiten SCR-Katalysator; K1: Verhältnis Zone 1 : Zone 2 = 1; frisch hergestellt; K2: Verhältnis Zone 1 : Zone 2 = 0,5; frisch hergestellt; K1': Verhältnis Zone 1 : Zone 2 = 1; thermisch vorbehandelt; K2': Verhältnis Zone 1 : Zone 2 = 0,5; thermisch vorbehandelt

**Figur 4:** den Temperaturverlauf vor und nach Katalysator bei gezieltem Abbrand von Kohlenwasserstoffen auf einem SCR-Katalysator enthaltend einen Cu-ausgetauschten Zeolithen

**Herstellung der untersuchten Katalysatoren**

Eines der wesentlichen Merkmale des erfindungsgemäßen Abgassystems ist die Hintereinanderschaltung zweier SCR-Katalysatoren in Strömungsrichtung des Abgases, die die SCR-Reaktion in unterschiedlichen Temperaturbereichen besonders wirksam katalysieren. Es gehört zu den bevorzugten Ausgestaltungen des erfindungsgemäßen Abgassystems, daß die beiden hintereinander geschalteten SCR-Katalysatoren als Beschichtungen auf demselben Tragkörper angeordnet sind, so daß ein einziges katalytisch aktives Bauteil mit zwei Katalysatorzonen entsteht.

In den nachstehenden Beispielen und Vergleichsbeispielen werden solche katalytisch aktiven Bauteile mit zwei Katalysatorzonen hergestellt. Die Herstellung der Bauteile erfolgt in allen gezeigten Vergleichsbeispielen und Beispielen in der folgenden Weise:

Auf einen inerten keramischen Wabenkörper mit einem Volumen von 0,04 1, einer Länge von 76,2 mm und einer Zellenzahl von 62 Zellen pro $cm^2$ (Wandstärke der Zellen: 0,17 mm), wird in einem konventionellen Tauchverfahren die den ersten SCR-Katalysator enthaltende Beschichtung bis zu einem zuvor definierten Punkt der Längenausdehnung des inerten Tragkörpers aufgebracht. Dann wird der noch unbeschichtete Teil des Wabenkörpers mit einer den zweiten SCR-Katalysator enthaltenden Beschichtung versehen, so daß beide Katalysatorzonen sich ohne Überlappungsbereich berühren.

Nachstehend angegeben sind die in den Beschichtungen der beiden Katalysatorzonen enthaltenen Komponenten und das Längenverhältnis der Katalysatorzonen zueinander.

**Vergleichsbeispiel 1:**

Es wurde ein Bauteil VK1 mit folgenden Katalysatorzonen hergestellt:

| Beschichtung enthaltend den ersten SCR-Katalysator: Zone 1 | kommerzieller SCR-Katalysatoren auf der Basis von $V_2O_5/TiO_2/WO_3$ enthaltend 1,75 Gew.-% $V_2O_5$: Beschichtungsmenge: 280 g/L (bezogen auf das Volumen des Tragkörpers anteilig der 1. Zone) |
|---|---|
| Beschichtung enthaltend den zweiten SCR-Katalysator: Zone 2 | mit Kupfer ausgetauschte β-Zeolithverbindung enthaltend 5 Gew.-% Cu bezogen auf das Gesamtgewicht der ausgetauschten Zeolithverbindung: Beschichtungsmenge: 175 g/L (bezogen auf das Volumen des Tragkörpers anteilig der 2. Zone) |
| Länge Zone 1 : Länge Zone 2 (Zone 1 = anströmseitig; Zone 2 = abströmseitig) | 1 |

**Vergleichsbeispiel 2:**

Es wurde ein Bauteil VK2 mit folgenden Katalysatorzonen hergestellt:

| Beschichtung enthaltend den ersten SCR-Katalysator: Zone 1 | mit Eisen ausgetauschter ZSM5-Zeolith enthaltend 3 Gew.-% Fe bezogen auf das Gesamtgewicht der ausgetauschten Zeolithverbindung:<br>Beschichtungsmenge: 160 g/L (bezogen auf das Volumen des Tragkörpers anteilig der 1. Zone) |
|---|---|
| Beschichtung enthaltend den zweiten SCR-Katalysator: Zone 2 | mit Kupfer ausgetauschte β-Zeolithverbindung enthaltend 5 Gew.-% Cu bezogen auf das Gesamtgewicht der ausgetauschten Zeolithverbindung:<br>Beschichtungsmenge: 175 g/L (bezogen auf das Volumen des Tragkörpers anteilig der 2. Zone) |
| Länge Zone 1 : Länge Zone 2<br>(Zone 1 = anströmseitig; Zone 2 = abströmseitig) | 1 |

**Beispiel 1:**

Es wurden vier Bauteile der folgenden Zusammensetzung hergestellt:

| Beschichtung enthaltend den ersten SCR-Katalysator: Zone 1 | $WO_3/(Ce, Zr)O_2$<br>Beschichtungsmenge: 200 g/L (bezogen auf das Volumen des Tragkörpers anteilig der 1. Zone) |
|---|---|
| Beschichtung enthaltend den zweiten SCR-Katalysator: Zone 2 | mit Kupfer ausgetauschte β-Zeolithverbindung enthaltend 5 Gew.-% Cu bezogen auf das Gesamtgewicht der ausgetauschten Zeolithverbindung:<br>Beschichtungsmenge: 175 g/L (bezogen auf das Volumen des Tragkörpers anteilig der 2. Zone) |

Zur Herstellung des $WO_3/(Ce, Zr)O_2$-Mischoxids für Zone 1 wurde ein homogenes Cer-Zirkon-Mischoxid (Hersteller: MEL; BET-Oberfläche: 82 m$^2$/g) mit einem Ceroxid-Gehalt von 48 Gew.-%, bezogen auf seine Gesamtmenge, durch Einbringen von Wolfram für die SCR-Reaktion aktiviert. Dazu wurde zunächst die Menge Wasser bestimmt, die vom Cer-Zirkon-Mischoxid aufgenommen werden kann, ohne daß das Material seine Rieselfähigkeit verliert. In der entsprechenden Menge Wasser wurde der Anteil Ammonium-metawolframat gelöst, der 10 Gew.-% Wolframoxid bezogen auf das Gesamtgewicht des herzustellenden, aktivierten Cer-Zirkon-Oxids entsprach. Das homogene Cer-Zirkon-Oxid wurde mit der so hergestellten wolframhaltigen Lösung porenfüllend imprägniert und anschließend zur thermischen Fixierung des Wolframs bei 500°C für die Dauer von 2 Stunden im Ofen an Luft gelagert. Das so erhaltene Material wurde in Wasser suspendiert, gemahlen und als Zone mit der entsprechenden Länge auf die keramischen Wabenkörper aufgebracht.

Die Teile unterschieden sich im Verhältnis der Längen der Zonen zueinander:

| Bezeichnung der Teile | Länge Zone 1 : Länge Zone 2<br>(Zone 1 = anströmseitig; Zone 2 = abströmseitig) |
|---|---|
| K1; K1' | 1 |
| K2; K2' | 0,5 |

Die Teile K1 und K2, wurde im frisch hergestellten Zustand untersucht.

Die Teile K1' und K2', wurden vor Untersuchung der katalytischen Eigenschaften in einem durchströmten Ofen für die Dauer von 48 Stunden in einer Atmosphäre enthaltend 10 Vol.-% Sauerstoff und 10 Vol.-% Wasserdampf in Stickstoff bei 650°C thermisch vorbehandelt.

**Experimentelle Untersuchungen zum Stickoxid-Umsatz**

An allen in den Vergleichsbeispielen 1 und 2 und in Beispiel 1 hergestellten katalytisch aktiven Bauteilen wurde der Stickoxid-Umsatz durch Testung in einer Labor-Modellgasanlage untersucht. Dabei wurden die folgenden Testbedingungen eingestellt:

| Zusammensetzung des Modellgases | |
|---|---|
| NO [Vol.-ppm]: | 500 |
| $NH_3$ [Vol.-ppm]: | 450 |
| $O_2$ [Vol.-%]: | 5 |
| $H_2O$ [Vol.-%] | 1,3 |
| HC ($C_1$) [Vol.-ppm] | 200 |
| CO [Vol.-ppm] | 200 |
| $N_2$: | Rest |
| | |
| Allgemeine Testbedingungen | |
| Raumgeschwindigkeit [$h^{-1}$]: | 30. 000 |
| Temperatur [°C]: | 500; 450; 400; 350; 300; 250; 200; 175; 150 |
| Konditionierung vor Meßbeginn: | Modellgas-Atmosphäre; 600°C; einige Minuten |

Während der Messung wurden die Stickoxid-Konzentrationen des Modellabgases nach Katalysator mit einer geeigneten Analytik erfasst. Aus den bekannten, dosierten Stickoxid-Gehalten, die während der Konditionierung zu Beginn des jeweiligen Prüflaufs mit einer Vor-Katalysator-Abgasanalytik verifiziert wurden, und den gemessenen Stickoxid-Gehalten nach Katalysator wurde der Stickoxid-Umsatz über den Katalysator für jeden Temperatunneßpunkt wie folgt berechnet:

$$U_{NO_x}[\%] \quad = \quad 1 - \quad \frac{c_{Ausgang}(NO_x)}{c_{Eingang}(NO_x)} \cdot 100$$

mit

$$c_{Eingang/Ausgang}(NO_x) = c_{Ein/Aus}(NO) + c_{Ein/Aus}(NO_2) + c_{Ei/Aus}(N_2O) \ldots$$

Die erhaltenen Stickoxid-Umsatz-Werte $U_{NOx}$ [%] wurden zur Beurteilung der SCR-Aktivität der untersuchten Materialien als Funktion der vor Katalysator gemessenen Temperatur aufgetragen.

Figur 2 zeigt das Ergebnis für die Bauteile nach dem Stand der Technik VK1 und VK2 im Vergleich zum erfindungsgemäßen Bauteil K1 in frisch hergestelltem Zustand. Alle diese Bauteile weisen ein Verhältnis der ersten, anströmseitigen Katalysatorzone zur zweiten, abströmseitigen Katalysatorzone von 1 auf.

Das ausschließlich aus Zeolith-basierten SCR-Katalysatoren aufgebaute Bauteil VK2, das gemäß dem Beispiel 2 in WO 2008/006427 hergestellt wurde, zeigt den schlechtesten $NO_x$-Umsatz. Das erfindungsgemäße Bauteil K1 zeigt in etwa dasselbe Umsatzverhalten wie VK1, kommt dabei aber ohne toxikologisch bedenkliche Vanadiumverbindungen in der ersten SCR-Katalysatorzone aus.

Der Einfluß des Längenverhältnisses der Katalysatorzonen auf das $NO_x$-Umsatzverhalten wurde unter denselben Versuchsbedingungen, jedoch in einem HC- und CO-freien Modellgas untersucht. Figur 3 zeigt das Ergebnis der Untersuchungen für erfindungsgemäße Bauteile im frisch hergestellten und im thermisch vorbehandelten Zustand. K1 (frisch hergestellt) bzw- K1' (thermisch vorbehandelt) weist ein Zonenlängenverhältnis von 1 auf. Bei K2 (frisch) bzw. K2' (thermisch vorbehandelt) ist die abströmseitig angeordnete Zone mit dem zweiten SCR-Katalysator doppelt so lang wie die anströmseitig angeordnete Zone mit dem ersten SCR-Katalysator (Zonenverhältnis 0,5).

Im frisch hergestellten Zustand hat die Veränderung der Zonenlänge im Tieftemperaturbereich bis 250°C keinen signifikanten Einfluß auf das Umsatzverhalten. Bei höheren Temperaturen sind die Stickoxid-Umsätze an K2 (Zonenverhältnis 0,5) etwas geringer und nehmen oberhalb von 400°C infolge einer Ammoniak-Überoxidation zu $N_2O$ an der abströmseitig angeordneten, Cu-Zeolith-haltigen Zone leicht ab.

Im thermisch vorbehandelten Zustand zeigt das Bauteil K2' deutliche Vorteile im Tieftemperaturbereich bis 300°C. Dann kehren sich die Verhältnisse um.

Die ideale Dimensionierung der Zonenlängen zueinander bzw. des Volumenverhältnisses des ersten und des zweiten SCR-Katalysator zueinander hängt also maßgeblich von der Zielanwendung ab. Bei überwiegend kälteren Anwendungen (T < 300°C) eignet sich eine Verschiebung des Längenverhältnisses (Volumenverhältnisses) zugunsten der abströmseitigen Zone auf Werte kleiner 1. Für Hochtemperaturanwendungen sollte der anströmseitige SCR-Katalysator größer dimensioniert sein als der abströmseitig angeordnete, zweite SCR-Katalysator.

**Experimentelle Untersuchungen zum HC-Oxidationsverhalten des zweiten, abströmseitig angeordneten SCR-Katalysators**

Das HC-Oxidationsverhalten des zweiten, abströmseitig anzuordneten SCR-Katalysators wurde nicht an einem gezonten Bauteil, sondern an einem Einzelkatalysator VK3 untersucht. Zur Herstellung von VK3 wurde eine mit Kupfer ausgetauschte β-Zeolithverbindung enthaltend 5 Gew.-% Cu bezogen auf das Gesamtgewicht der ausgetauschten Zeolithverbindung als Beschichtung in einem konventionellen Tauchverfahren auf einen inerten keramischen Wabenkörper aufgebracht. Der Wabenkörper hatte ein Volumen von 0,04 l, eine Länge von 76,2 mm und eine Zellenzahl von 62 Zellen pro $cm^2$. Die Wandstärke der Zellen betrug 0,17 mm.

Um die Auswirkungen einer unvollständigen HC-Oxidation im ersten SCR-Katalysator und die Folgen eines Abbrands von im Zeolithen gespeicherten Kohlenwasserstoffen auf den zweiten Katalysator abschätzen zu können, wurde die aus einem solchen Abbrand resultierende Exotherme untersucht. Dazu wurde VK3 zunächst in einem HChaltigen Abgas bei 100°C gezielt mit Kohlenwasserstoff "beladen". Die Kohlenwasserstoffe des Abgases wurden in der Zeolithstruktur eingespeichert. Anschließend wurde eine Vorkonditionierung des HC-beladenen Katalysators VK3 in einer Modellgas-Atmosphäre enthaltend 10 Vol.-% $O_2$, 10 Vol.-% $CO_2$ und 5 Vol.-% $H_2O$ in Stickstoff bei 100°C für die Dauer von 10 Minuten vorgenommen und die Temperatur von 100°C auf 400°C erhöht. Figur 4 zeigt den Temperaturverlauf vor und nach VK3. Am Verlauf der Temperatur im Katalysator ist zu erkennen, daß der HC-Abbrand bei einer Temperatur von ca. 260°C vor Katalysator zündet. Die daraus resultierende Exotherme führt zu einem Temperaturanstieg im Katalysator von über 800°C. Aus dieser Temperaturbelastung resultiert typischerweise eine Schädigung der zeolithischen Gerüststruktur, so daß infolge eines solchen HC-Abbrands auf dem abströmseitig angeordneten SCR-Katalysator eine deutliche Schädigung der SCR-Aktivität desselben zu erwarten ist.

Dies bedeutet, daß die Dauerstabilität eines Abgasreinigungssystems aus zwei SCR-Katalysatoren in HC-haltigem Abgas auch maßgeblich davon abhängt, wie gut Kohlenwasserstoffe aus dem Abgas über dem ersten, anströmseitig angeordneten SCR-Katalysator umgesetzt werden können. Der im erfindungsgemäßen System bevorzugt anströmseitig angeordnete SCR-Katalysator verfügt über eine gute, einem Vanadiumhaltigen SCR-Katalysator vergleichbare HC-Oxidationsaktivität, ohne dabei toxikologisch bedenkliche Verbindungen zu enthalten. Wir glauben, daß dementsprechend das erfindungsgemäße System zusätzlich zu dem gegenüber vollzeolithischen Systemen nach dem Stand der Technik deutlich verbesserten Anspringverhalten in der SCR-Reaktion auch eine verbesserte Dauerstabilität aufweist.

**Patentansprüche**

1. Verfahren zur Behandlung von Stickoxide und Kohlenwasserstoffe enthaltenden Dieselmotorenabgasen umfassend:

   (a) die Zugabe von Ammoniak oder einer zu Ammoniak zersetzlichen Verbindung aus einer nicht zum Abgasstrang gehörenden Quelle in den Stickoxide und Kohlenwasserstoffe enthaltenden Abgasstrom;
   (b) das Überleiten des Stickoxide, Kohlenwasserstoffe und Ammoniak oder eine zu Ammoniak zersetzliche Verbindung enthaltenden Abgasstroms über einen ersten, anströmseitig angeordneten SCR-Katalysator enthaltend Wolframoxid $WO_3$ und ein homogenes Cer-Zirkon-Mischoxid (Ce, Zr)$O_2$, der die Komproportionierung der Stickoxide mit Ammoniak in einem Temperaturbereich zwischen 300°C und 500°C wirksam katalysiert, und dabei die im Abgas enthaltenen Kohlenwasserstoffe mindestens teilweise oxidiert; und
   (c) das Überleiten des aus (b) resultierenden Abgases über einen zweiten, abströmseitig angeordneten SCR-Katalysator enthaltend eine Kupfer- (Cu-) ausgetauschte Zeolithverbindung, der die Komproportionierung der Stickoxide mit Ammoniak in einem Temperaturbereich zwischen 150°C und 400°C wirksam katalysiert und zugleich überschüssiges Ammoniak speichert.

2. Verfahren nach Anspruch 1,
   **dadurch gekennzeichnet,**

**daß** der Stickoxide und Kohlenwasserstoffe enthaltende Abgasstrom vor der Zugabe von Ammoniak oder einer zu Ammoniak zersetzlichen Verbindung in (a) über einen Oxidationskatalysator geleitet wird, der mindestens einen Teil des in den Stickoxiden enthaltenden NO zu $NO_2$ oxidiert.

3. Verfahren nach Anspruch 2,
   **dadurch gekennzeichnet,**
   **daß** das $NO_2/NO_x$-Verhältnis im Abgas so verändert wird, daß der Abgasstrom vor dem Überleiten über den ersten, anströmseitig angeordneten SCR-Katalysator in (b) ein $NO_2/NO_x$-Verhältnis von 0,3 bis 0,7 aufweist.

4. Verfahren nach Anspruch 1,
   **dadurch gekennzeichnet,**
   **daß** die in (a) zum Abgasstrom hinzuzufügende Menge Ammoniak oder einer zu Ammoniak zersetzlichen Verbindung so gewählt wird, daß der Abgasstrom vor dem Überleiten über den ersten, anströmseitig angeordneten SCR-Katalysator in (b) ein $NH_3/NO_x$-Verhältnis von 0,8 bis 1,2 aufweist.

5. Verfahren nach Anspruch 4,
   **dadurch gekennzeichnet,**
   **daß** der Abgasstrom nach dem Überleiten durch den zweiten, abströmseitig angeordneten SCR-Katalysator in (c) über einen Oxidationskatalysator geleitet wird, der selektiv die Oxidation von Ammoniak zu Stickstoff katalysiert.

6. Verfahren nach Anspruch 5,
   **dadurch gekennzeichnet,**
   **daß** der Oxidationskatalysator auf einem Rußpartikel filternden Tragkörper angeordnet ist.

7. Abgasreinigungsvorrichtung zur Verminderung von Stickoxiden im mageren Abgas von Verbrennungsmotoren enthaltend in Kombination und in dieser Reihenfolge

   (1) eine Vorrichtung zur Zugabe von Ammoniak oder einer zu Ammoniak zersetzlichen Verbindung in den Stickoxide enthaltenden Abgasstrom aus einer nicht zum Abgasstrang gehörenden Quelle, sowie die Quelle für Ammoniak oder eine zu Ammoniak zersetzliche Verbindung;
   (2) einen ersten SCR-Katalysator, der die Komproportionierung der Stickoxide mit Ammoniak in einem Temperaturbereich zwischen 300°C und 500°C wirksam katalysiert und weder Vanadium- noch Zeolithverbindungen, dafür jedoch Wolframoxid $WO_3$ und ein homogenes Cer-Zirkon-Mischoxid $(Ce, Zr)O_2$ enthält; und
   (3) einen zweiten, Vanadium-freien SCR-Katalysator, der die Komproportionierung der Stickoxide mit Ammoniak in einem Temperaturbereich zwischen 150°C und 400°C wirksam katalysiert und eine Kupfer- (Cu-) ausgetauschte Zeolithverbindung enthält.

8. Abgasreinigungsvorrichtung nach Anspruch 7,
   **dadurch gekennzeichnet,**
   **daß** jeder der beiden SCR-Katalysatoren als Beschichtung auf einem inerten Tragkörper vorliegt.

9. Abgasreinigungsvorrichtung nach Anspruch 7,
   **dadurch gekennzeichnet,**
   **daß** der erste und der zweite SCR-Katalysator als Beschichtung auf demselben Tragkörper angeordnet sind.

10. Abgasreinigungsvorrichtung nach Anspruch 9,
    **dadurch gekennzeichnet,**
    **daß** der erste SCR-Katalysator als anströmseitig angeordnete Beschichtungszone auf dem Tragkörper vorliegt und der zweite SCR-Katalysator die abströmseitige Beschichtungszone auf dem Tragkörper bildet.

11. Abgasreinigungsvorrichtung nach Anspruch 10,
    **dadurch gekennzeichnet,**
    **daß** das Verhältnis der Längen von anströmseitig angeordneter Beschichtungszone zu abströmseitiger Beschichtungszone zwischen 0,1 und 3 beträgt.

12. Abgasreinigungsvorrichtung nach Anspruch 7,
    **dadurch gekennzeichnet,**
    **daß** der Gehalt von Wolframoxid $WO_3$ im ersten SCR-Katalysator zwischen 5 und 25 Gew.-% liegt, bezogen auf die Gesamtmenge des ersten SCR-Katalysators ohne Berücksichtigung der Masse des inerten Tragkörpers.

13. Abgasreinigungsvorrichtung nach Anspruch 7,
**dadurch gekennzeichnet,**
**daß** der Gehalt von homogenem Cer-Zirkon-Mischoxid (Ce, Zr)$O_2$ im ersten SCR-Katalysator zwischen 50 und 95 Gew.-% liegt, bezogen auf die Gesamtmenge des ersten SCR-Katalysators ohne Berücksichtigung der Masse des inerten Tragkörpers

14. Abgasreinigungsvorrichtung nach Anspruch 13,
**dadurch gekennzeichnet,**
**daß** das Gewichtsverhältnis von Ceroxid $CeO_2$ und Zirkonoxid $ZrO_2$ im homogenen Cer-Zirkon-Mischoxid (Ce, Zr)$O_2$ zwischen 0,43 und 2,33 liegt.

15. Abgasreinigungsvorrichtung nach Anspruch 7
**dadurch gekennzeichnet,**
**daß** der zweite SCR-Katalysator eine Kupfer- (Cu-) ausgetauschte Zeolithverbindung mit einem Gehalt von 2 bis 10 Gew.-% Cu bezogen auf das Gesamtgewicht der Zeolithverbindung enthält.

16. Abgasreinigungsvorrichtung nach Anspruch 15,
**dadurch gekennzeichnet,**
**daß** die Zeolithverbindung ausgewählt ist aus der Gruppe bestehend aus beta-(β-) Zeolith, Y-Zeolith, ZSM-5, ZSM-20, Ferrierit und Mordenit.

**Claims**

1. Method for the treatment of diesel engine exhaust gases containing nitrogen oxides and hydrocarbons, comprising:

   (a) adding ammonia, or a compound which is decomposable to form ammonia, from a source remote from the exhaust-gas section into the exhaust-gas stream containing nitrogen oxides and hydrocarbons;
   (b) conducting the exhaust-gas stream containing nitrogen oxides, hydrocarbons and ammonia or a compound decomposable to ammonia over a first SCR catalyst which is arranged upstream and which contains tungsten oxide $WO_3$ and a homogeneous cerium-zirconium mixed oxide (Ce, Zr)$O_2$ which effectively catalyzes the comproportionation of the nitrogen oxides with ammonia in a temperature range between 300°C and 500°C and which in doing so at least partially oxidizes the hydrocarbons contained in the exhaust gas; and
   (c) conducting the exhaust gas resulting from (b) over a second SCR catalyst which is arranged downstream and which contains a copper-(Cu-)exchanged zeolite compound which effectively catalyzes the comproportionation of the nitrogen oxides with ammonia in a temperature range between 150°C and 400°C and which simultaneously stores excess ammonia.

2. Method according to Claim 1,
**characterized**
**in that** the exhaust-gas stream containing nitrogen oxides and hydrocarbons is conducted, before the addition in (a) of ammonia or of a compound decomposable to ammonia, over an oxidation catalyst which oxidizes at least a part of the NO contained in the nitrogen oxides into $NO_2$.

3. Method according to Claim 2,
**characterized**
**in that** the $NO_2/NO_x$ ratio in the exhaust gas is changed such that the exhaust-gas stream, before being conducted in (b) over the first SCR catalyst arranged upstream, has an $NO_2/NO_x$ ratio of 0.3 to 0.7.

4. Method according to Claim 1,
**characterized**
**in that** the quantity of ammonia, or of a compound decomposable to ammonia, to be added in (a) to the exhaust-gas stream is selected such that the exhaust-gas stream, before being conducted in (b) over the first SCR catalyst arranged upstream, has an $NH_3/NO_x$ ratio of 0.8 to 1.2.

5. Method according to Claim 4,

**characterized**
**in that** the exhaust-gas stream, after being conducted in (c) over the second SCR catalyst arranged downstream, is conducted over an oxidation catalyst which selectively catalyzes the oxidation of ammonia to form nitrogen.

6. Method according to Claim 5,
**characterized**
**in that** the oxidation catalyst is arranged on a substrate which filters soot particles.

7. Exhaust-gas cleaning device for the reduction of nitrogen oxides in the lean exhaust gas of internal combustion engines, comprising, in combination and in order,

(1) a device for adding ammonia, or a compound decomposable to ammonia, from a source remote from the exhaust section into the exhaust-gas stream containing nitrogen oxides, and the source for ammonia or a compound decomposable to ammonia;
(2) a first SCR catalyst which effectively catalyzes the comproportionation of the nitrogen oxides with ammonia in a temperature range between 300°C and 500°C and contains neither vanadium nor zeolite compounds but, for this purpose, contains tungsten oxide $WO_3$ and a homogeneous cerium-zirconium mixed oxide $(Ce, Zr)O_2$; and
(3) a second, vanadium-free SCR catalyst which effectively catalyzes the comproportionation of the nitrogen oxides with ammonia in a temperature range between 150°C and 400°C and contains a copper-(Cu-)exchanged zeolite compound.

8. Exhaust-gas cleaning device according to Claim 7,
**characterized**
**in that** each of the two SCR catalysts is present in the form of a coating on an inert substrate.

9. Exhaust-gas cleaning device according to Claim 7,
**characterized**
**in that** the first and second SCR catalyst are arranged as a coating on the same substrate.

10. Exhaust-gas cleaning device according to Claim 9,
**characterized**
**in that** the first SCR catalyst is present in the form of a coating zone arranged upstream on the substrate, and the second SCR catalyst forms the downstream coating zone on the substrate.

11. Exhaust-gas cleaning device according to Claim 10,
**characterized**
**in that** the ratio of the length of the upstream coating zone to the length of the dowstream coating zone is between 0.1 and 3.

12. Exhaust-gas cleaning device according to Claim 7,
**characterized**
**in that** the content of tungsten oxide $WO_3$ in the first SCR catalyst is between 5 and 25% by weight based on the total weight of the first SCR catalyst without taking into consideration the mass of the inert substrate.

13. Exhaust-gas cleaning device according to Claim 7,
**characterized**
**in that** the content of homogeneous cerium-zirconium mixed oxide $(Ce, Zr)O_2$ in the first SCR catalyst is between 50 and 95% by weight based on to the total weight of the first SCR catalyst without taking into consideration the mass of the inert substrate.

14. Exhaust-gas cleaning device according to Claim 13,
**characterized**
**in that** the weight ratio of cerium oxide $CeO_2$ and zirconium oxide $ZrO_2$ in the homogeneous cerium-zirconium mixed oxide $(Ce, Zr)O_2$ is between 0.43 and 2.33.

15. Exhaust-gas cleaning device according to Claim 7,
**characterized**

**in that** the second SCR catalyst comprises a copper-(Cu-)exchanged zeolite compound with a content of 2 to 10% by weight Cu based on the total weight of the zeolite compound.

16. Exhaust-gas cleaning device according to Claim 15,
    **characterized**
    **in that** the zeolite compound is selected from the group consiting of beta-(β-)zeolite, Y-zeolite, ZSM-5, ZSM-20, ferrierite and mordenite.

**Revendications**

1. Procédé de traitement des gaz d'échappement d'un moteur diesel qui contiennent des oxydes d'azote et des hydrocarbures, comprenant les étapes suivantes :

   (a) depuis une source qui ne fait pas partie du conduit d'échappement, addition d'ammoniac ou d'un composé qui se décompose en ammoniac dans l'écoulement de gaz d'échappement contenant des oxydes d'azote et des hydrocarbures,
   (b) passage de l'écoulement de gaz d'échappement qui contient des oxydes d'azote, des hydrocarbures et de l'ammoniac ou un composé qui se décompose en ammoniac sur un premier catalyseur SCR disposé en amont et contenant de l'oxyde de tungstène (WO$_3$) et un oxyde mixte homogène de cérium et de zirconium (Ce, Zr) O$_2$ qui catalyse efficacement la comproportionation des oxydes d'azote avec l'ammoniac dans une plage de température comprise entre 300°C et 500°C pour ainsi oxyder au moins en partie les hydrocarbures que contiennent les gaz d'échappement et
   (c) passage des gaz d'échappement obtenus en (b) sur un deuxième catalyseur SCR disposé en aval et contenant un composé de zéolithe substitué avec du cuivre (Cu) qui catalyse efficacement la comproportionation des oxydes d'azote avec l'ammoniac dans une plage de température comprise entre 150°C et 400°C et en même temps accumule l'ammoniac en excès.

2. Procédé selon la revendication 1, **caractérisé en ce qu'**avant l'addition d'ammoniac ou d'un composé qui se décompose en ammoniac de l'étape (a), l'écoulement de gaz d'échappement qui contient des oxydes d'azote et des hydrocarbures est amené sur un catalyseur d'oxydation qui oxyde en NO$_2$ au moins une partie du NO que contiennent les oxydes d'azote.

3. Procédé selon la revendication 2, **caractérisé en ce que** le rapport NO$_2$/NO$_x$ dans les gaz d'échappement est modifié de telle sorte que l'écoulement de gaz d'échappement présente un rapport NO$_2$/NO$_x$ de 0,3 à 0,7 avant le passage sur le premier catalyseur SCR amont de l'étape (b).

4. Procédé selon la revendication 1, **caractérisé en ce que** la quantité d'ammoniac ou d'un composé qui se décompose en ammoniac à ajouter en (a) à l'écoulement de gaz d'échappement est sélectionnée de telle sorte que l'écoulement de gaz d'échappement présente un rapport NH$_3$/NO$_x$ de 0,8 à 1,2 avant le passage sur le premier catalyseur SCR amont de l'étape (b).

5. Procédé selon la revendication 4, **caractérisé en ce qu'**après le passage sur le deuxième catalyseur SCR aval de l'étape (c), l'écoulement de gaz d'échappement est passé sur un catalyseur d'oxydation qui catalyse sélectivement l'oxydation d'ammoniac en azote.

6. Procédé selon la revendication 5, **caractérisé en ce que** le catalyseur d'oxydation est disposé sur un corps de support qui filtre les particules de suie.

7. Dispositif d'épuration des gaz d'échappement en vue de la réduction des oxydes d'azote dans les gaz d'échappement pauvres de moteurs à combustion interne, contenant en combinaison et dans la succession indiquée :

   (1) un dispositif d'addition d'ammoniac ou d'un composé qui se décompose en ammoniac dans l'écoulement de gaz d'échappement contenant des oxydes d'azote, à partir d'une source qui ne fait pas partie du conduit d'échappement, cette source étant une source d'ammoniac ou d'un composé qui se décompose en ammoniac,
   (2) un premier catalyseur SCR qui catalyse efficacement la comproportionation des oxydes d'azote avec l'ammoniac dans une plage de température comprise entre 300°C et 500°C et ne contient ni vanadium ni composé de zéolithe mais de l'oxyde de tungstène (WO$_3$) et un oxyde mixte homogène de cérium et de zirconium (Ce,

Zr)O$_2$ et

(3) un deuxième catalyseur SCR exempt de vanadium qui catalyse efficacement la comproportionation des oxydes d'azote avec l'ammoniac dans une plage de température comprise entre 150°C et 400°C et qui contient un composé de zéolithe substituée avec du cuivre (Cu).

8.  Dispositif d'épuration de gaz d'échappement selon la revendication 7, **caractérisé en ce que** chacun des deux catalyseurs SCR présente la forme d'un revêtement sur un corps porteur inerte.

9.  Dispositif d'épuration de gaz d'échappement selon la revendication 7, **caractérisé en ce que** le premier et le deuxième catalyseur SCR sont disposés sous la forme de revêtements sur le même corps porteur.

10. Dispositif d'épuration de gaz d'échappement selon la revendication 9, **caractérisé en ce que** le premier catalyseur SCR présente la forme d'une zone de revêtement disposée en amont sur le corps porteur et le deuxième catalyseur SCR forme la zone de revêtement aval du corps porteur.

11. Dispositif d'épuration de gaz d'échappement selon la revendication 10, **caractérisé en ce que** le rapport entre la longueur de la zone de revêtement amont et la zone de revêtement aval est compris entre 0,1 et 3.

12. Dispositif d'épuration de gaz d'échappement selon la revendication 7, **caractérisé en ce que** la teneur en oxyde de tungstène WO$_3$ dans le premier catalyseur SCR est comprise entre 5 et 25 % en poids par rapport à la quantité totale du premier catalyseur SCR, compte non tenu de la masse du corps porteur inerte.

13. Dispositif d'épuration de gaz d'échappement selon la revendication 7, **caractérisé en ce que** la teneur en oxyde mixte de cérium et de zirconium (Ce, Zr)O$_2$ dans le premier catalyseur SCR est comprise entre 50 et 95 % en poids par rapport à la quantité totale du premier catalyseur SCR, compte non tenu de la masse du corps porteur inerte.

14. Dispositif d'épuration de gaz d'échappement selon la revendication 13, **caractérisé en ce que** le rapport pondéral entre l'oxyde de cérium CeO$_2$ et l'oxyde de zirconium ZrO$_2$ dans l'oxyde mixte homogène de cérium et de zirconium (Ce, Zr)O$_2$ est compris entre 0,43 et 2,33.

15. Dispositif d'épuration de gaz d'échappement selon la revendication 7, **caractérisé en ce que** le deuxième catalyseur SCR contient un composé de zéolithe substituée avec du cuivre (Cu) dont la teneur en Cu est de 2 à 10 % en poids par rapport au poids total du composé de zéolithe.

16. Dispositif d'épuration de gaz d'échappement selon la revendication 15, **caractérisé en ce que** le composé de zéolithe est sélectionné dans l'ensemble constitué des zéolithes beta (β), des zéolithes Y, du ZSM-5, du ZSM-20, de la ferriérite et de la mordénite.

**Figur 1**

**Temperatur vor SCR-Katalysator / °C**

**Figur 2**

**Figur 3**

**Meßzeit /s**

**Figur 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0385164 B
- US 4961917 A
- EP 1495804 A
- US 6914026 B
- US 20060039843 A1
- EP 1795724 A
- EP 0393905 A
- US 5516497 A
- WO 2008006427 A